(19) Europäisches Patentamt
European Patent Office
Office européen des brevets

(11) Numéro de publication : 0 347 284 B1

# (12) FASCICULE DE BREVET EUROPEEN

(45) Date de publication du fascicule du brevet : **30.09.92 Bulletin 92/40**

(51) Int. Cl.[5] : **C22B 58/00,** C01G 15/00, C22B 3/00

(21) Numéro de dépôt : **89401570.0**

(22) Date de dépôt : **07.06.89**

## (54) Procédé de récupération de gallium.

(30) Priorité : **15.06.88 FR 8807993**

(43) Date de publication de la demande : **20.12.89 Bulletin 89/51**

(45) Mention de la délivrance du brevet : **30.09.92 Bulletin 92/40**

(84) Etats contractants désignés : **AT BE CH DE ES FR GB GR IT LI LU NL SE**

(56) Documents cités :
**EP-A- 0 002 970**
**EP-A- 0 053 971**
**EP-A- 0 102 280**
**US-A- 3 637 711**
**US-A- 3 971 843**
**US-A- 4 058 585**
**US-A- 4 128 493**
**CHEMICAL ABSTRACTS, vol. 78, no. 24, 18 juin 1973, Columbus, OH (US); M.J.HERAK et al., p. 281, no. 152070w***
**CHEMICAL ABSTRACTS, vol. 71, 1969, Columbus, OH (US); Y.A.ZOLOTOV et al., p. 279, no. 16378f***

(56) Documents cités :
**CHEMICAL ABSTRACTS, vol. 77, 1972, Columbus, OH (US); L.M.RAGUZINA et al., p. 598, no. 96575e***
**CHEMICAL ABSTRACTS, vol. 77, 1972, Columbus, OH (US); B.K.AVINASHI et al., p. 332, no. 131387u***
**CHEMICAL ABSTRACTS, vol. 80, 1974, Columbus, OH (US); A.MASSOUMI et al., p. 313, no. 64368k***

(73) Titulaire : **RHONE-POULENC CHIMIE**
**25, quai Paul Doumer**
**F-92408 Courbevoie Cédex (FR)**

(72) Inventeur : **Bauer, Denise**
**115, Rue Saint Antoine**
**F-75005 Paris (FR)**
Inventeur : **Cote, Gérard**
**3, Impasse sous la Tour**
**F-92160 Antony (FR)**
Inventeur : **Faux-Mallet, Marie-Sabine**
**12, Rue de Cotte**
**F-75012 Paris (FR)**

(74) Mandataire : **Esson, Jean-Pierre et al**
**RHONE-POULENC CHIMIE Service Brevets Chimie 25, quai Paul Doumer**
**F-92408 Courbevoie Cedex (FR)**

EP 0 347 284 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de récupération de gallium par mise en oeuvre d'un procédé d'extraction liquide/liquide.

Elle se rapporte plus particulièrement à un procédé d'extraction liquide/liquide du gallium à partir de solution aqueuse contenant notamment du zinc.

En effet, le gallium qui est un métal très recherché pour ses applications notamment en électronique, se trouve à l'état naturel uniquement comme impureté dans différents minerais.

Ainsi, les minerais d'aluminium, comme la bauxite, contiennent du gallium qui est récupéré par plusieurs procédés connus et notamment par un procédé d'extraction liquide/liquide à partir des solutions d'aluminate de sodium du procédé de fabrication de l'aluminium.

Le gallium se trouve également comme impureté dans les minerais de zinc. Les procédés connus de récupération du gallium dans le zinc mettent en oeuvre généralement des techniques d'électrolyse de solution, contenant ces éléments. Toutefois, aucun procédé d'extraction liquide/liquide ne permettrait jusqu'à présent une séparation directe et efficace industriellement exploitable du gallium dans les minerais de zinc.

En effet, les brevets américains n° 4058585 et 4128493 décrivent un procédé d'extraction des cations divalents par utilisation comme agent extractant compléxant d'un composé d'ammonium quaternaire avec un agent d'échange d'un hydrogéne tel que l'hydroxyquinoléine substituée. Toutefois, ces procédés ne permettent pas une extraction et séparation du gallium d'une solution contenant du zinc.

Toutefois, on aurait pu penser que certains extractants (complexants) pourraient extraire sélectivement le gallium par rapport au zinc dans des conditions de pH déterminées. Néanmoins cette séparation n'a pu être réalisée car la cinétique d'extraction du gallium étant très lente, les temps de contact entre la solution aqueuse et l'extractant sont longs.

Le brevet européen n° 102280 décrit un procédé pour améliorer l'échange des ions gallium entre une phase organique contenant comme agent extractant une hydroxyquinoléine substituée et une phase aqueuse basique d'aluminate de sodium. Cette amélioration est obtenue par addition de composés sulfates ou sulfonates d'alkyles dans la phase organique. Ce procédé est mis en oeuvre dans des conditions de pH opposées à celles d'une solution aqueuse contenant du zinc.

L'invention a notamment pour but de remédier à ces inconvénients en proposant un procédé d'extraction liquide/liquide comprenant une phase extractante permettant d'accélérer de manière significative la cinétique d'extraction du gallium contenu dans des solutions aqueuses notamment, issues du traitement des minerais de zinc.

A cet effet, l'invention propose un procédé de récupération de gallium contenu dans des solutions aqueuses acides contenant notamment du zinc, par un procédé d'extraction liquide/liquide consistant à mettre en contact la solution aqueuse avec une phase organique contenant principalement un solvant organique et un extractant, caractérisé en ce que l'extractant est un ou un mélange de composés appartenant à la famille des hydroxyquinoléines substituées.

De plus, pour améliorer la cinétique de l'extraction du gallium, la phase organique contient également un agent tensio-actif à caractère ionique et un co-agent associé, choisi dans le groupe des alcools comprenant de 4 à 15 atomes de carbone, la phase aqueuse ayant un pH ajusté à une valeur inférieure à 3 avant sa mise en contact avec la phase organique.

On peut expliquer cette amélioration de la cinétique d'extraction par l'augmentation de la surface d'échange. En effet, le tensio-actif permet d'avoir un mélange intime entre les phases organique et aqueuse. Toutefois, l'existence de ce mélange intime n'est certainement pas la seule explication, car certains tensio-actifs comme les tensio-actifs non ioniques ne sont pas convenables.

En effet, les agents tensio-actifs convenables pour l'invention sont les agents présentant un caractère cationique ou anionique, et de préférence ionisés à un pH inférieur à environ 3.

Les agents tensio-actifs convenables pour l'invention sont notamment choisis dans le groupe comprenant les sulfates et sulfonates.

Les sulfates ou sulfonates substitués que l'on peut mettre en oeuvre selon l'invention sont représentés par les formules générales suivantes :

$$R_1O - SO_3M \qquad R_2 - SO_3M$$

dans lesquelles $R_1$ est un radical alkyle et $R_2$ est un radical alkyle ou alicyclique ou aryle. $R_1$ et $R_2$ comportent de 1 à 20 atomes de carbone et de préférence entre 5 et 18.

M représente l'atome d'hydrogéne ou un atome métallique. La plupart des métaux conviennent. Cependant on choisira de préférence un atome alcalin. C'est ainsi que les sels de sodium des acides sulfuriques et sulfoniques substitués conviennent particulièrement.

Parmi les composés précédents, on peut citer les sulfates d'alcoyle, par exemple le laurysulfate de sodium

et les alkylbenzène sulfonates par exemple le dodécylbenzènesulfonate de sodium. Ces deux sels de sodium sont des agents tensio-actifs particulièrement bon marché.

Les tensio-actifs cationiques convenables pour l'invention sont les sels d'ammonium quaternaire ou d'amine à chaînes longues comprenant au moins 4 atomes de carbone.

Ces composés ont les formules générales suivantes :

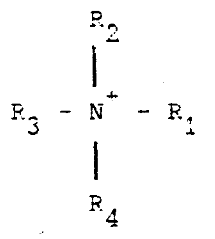

et

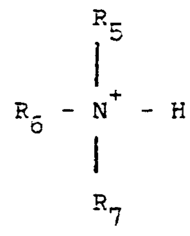

$R_1$, $R_2$, $R_3$, $R_4$ identiques ou différents représentent un radical alkyle, $R_5$ $R_5$, $R_7$ identiques ou différents représentant un radical alkyle dont au moins un comprend au moins 4 atomes de carbone et de préférence entre 4 et 15 atomes de carbone.

Ces composés peuvent être utilisés seuls ou en mélange. De préférence, ces composés doivent, dans les conditions de mise en oeuvre de l'invention, être plus solubles dans la phase organique que dans la phase aqueuse.

La proportion d'agents tensio-actifs dans la phase organique n'est pas critique, et peut varier dans de larges limites. Avantageusement, la concentration du tensio-actif est comprise entre 2 et 40 % en poids de préférence entre 2 et 10 % de la phase organique.

Selon une autre caractéristique de l'invention le co-agent de l'agent tensio-actif est choisi dans le groupe des alcools lourds ayant de 4 à 15 atomes de carbone.

Comme co-agent, on peut citer à titre d'exemple, le butanol, le pentanol, l'hexanol, l'heptanol et l'octanol.

Selon une caractéristique de l'invention, le co-agent est présent dans la phase organique dans une proportion telle que le rapport molaire tensio-actif/co-agent est compris entre 0,02 et 0,5 environ, de préférence entre 0,02 et 0,3.

Selon une autre caractéristique de l'invention, le pH de la solution aqueuse, notamment quand elle contient du zinc, est ajusté à une valeur inférieure à 3 environ avant la mise en contact avec la phase organique et maintenue dans ce domaine pendant l'extraction. Cette solution aqueuse peut contenir différents éléments comme, par exemple, le cobalt, le cadmium, l'arsenic, fer ou nickel ainsi que différents anions tels que des chlorures, des sulfates ou des nitrates.

La phase organique contient un solvant organique non miscible à l'eau et un extractant.

Les solvants organiques que l'on met en oeuvre selon l'invention sont les diluants utilisés en extraction liquide/liquide, ils peuvent être utilisés seuls ou en mélange. Parmi ceux-ci, on peut citer les hydrocarbures aliphatiques comme, par exemple, l'heptane et les coupes pétrolières du type kérosène ; les hydrocarbures aromatiques comme, par exemple, le benzène, le toluène, le xylène et les coupes du type SOLVESSO (marque déposée par la Société EXXON) et, enfin, les dérivés halogénés de ces composés comme, par exemple, le chloroforme et le tétrachlorure de carbone, le dichloroéthane et le trichloropropane.

Les hydroxyquinoléines substituées selon l'invention sont celles pouvant extraire le gallium par complexation dans les conditions de l'invention, elles doivent, de plus, dans ces conditions, être plus solubles dans la phase organique que dans la phase aqueuse.

Les hydroxyquinoléines substituées convenant aux fins de l'invention sont notamment celles de formule générale :

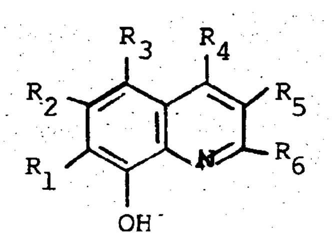

dans laquelle $R_1$, $R_2$, $R_3$, $R_4$, $R_5$, $R_6$ identiques ou différents sont choisis parmi le groupe constitué par l'hydrogène, les halogènes, les radicaux alkyle, alcényle, alicyclique, aryle ; $R_1$, $R_2$, $R_3$, $R_4$, $R_5$, $R_6$ ne pouvant représenter simultanément l'hydrogène. Parmi ces hydroxyquinoléines substituées, celles convenant particulièrement bien aux fins de l'invention sont notamment les α-alcényl hydroxy-8 quinoléines, les β-alcényl hydroxy-8 quinoléines et les alkyl hydroxy-8 quinoléines.

Les α-alcényl hydroxy-8 quinoléines préférées selon l'invention ont pour formule générale :

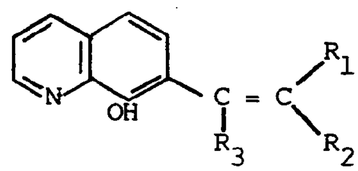

dans laquelle $R_1$, $R_2$, $R_3$ représentent un hydrogène ou un groupement hydrocarbone. Parmi celles-ci on utilisera notamment celles de formule générale :

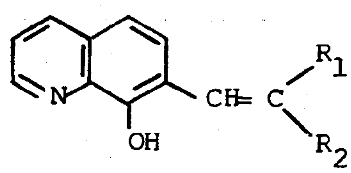

ou

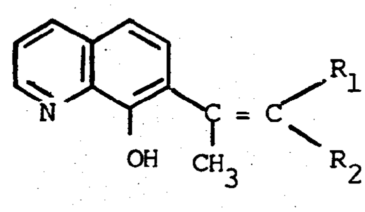

Les β alcényl hydroxy-8 quinoléines préférées selon l'invention ont pour formule générale :
dans laquelle $R_1$, $R_2$, $R_3$, $R_4$, $R_6$ représentent un hydrogène ou un groupement hydrocarbone.

Les alkyl hydroxy-8 quinoléines préférées selon l'invention ont pour formule :

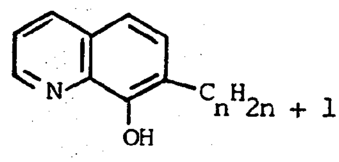

dans laquelle n est compris entre 1 et 20, et, de préférence, entre 5 et 15.

Ces hydroxyquinoléines peuvent être mises en oeuvre selon l'invention, seules ou en mélange.

La proportion en hydroxyquinoléine substituée dans la phase organique n'est pas critique et peut varier dans de larges limites.

Toutefois, une proportion comprise entre 1 et 50 % en volume rapportés à la phase organique convient généralement, une proportion comprise entre 6 et 12 % étant économiquement favorable.

La température de mise en oeuvre de l'invention n'est pas un facteur critique. C'est même un des avantages procuré par le procédé de l'invention que de permettre d'opérer l'extraction à n'importe quelle température. Ainsi, généralement, une température d'extraction comprise entre 10°C et 50°C permet d'obtenir des taux d'extraction du gallium très satisfaisants.

Le procédé de l'invention permet la récupération du gallium de solutions aqueuses acides contenant notamment du zinc, quand l'étape d'extraction proprement dite est suivie d'une étape de récupération du gallium

contenu dans la phase organique par exemple par lavage au moyen de solutions acides.

Pour réaliser cette récupération du gallium au moyen de solutions acides, on peut mettre en oeuvre des acides forts choisis, de préférence, dans le groupe comprenant l'acide chlorhydrique, l'acide sulfurique, l'acide nitrique, l'acide bromhydrique et l'acide perchlorique.

Cette récupération peut être réalisée de différentes manières, selon que le gallium est récupéré sélectivement ou non.

A titre d'exemple, trois variantes de procédés sont données ci-dessous.

Selon une première variante, après avoir séparé la phase organique de la phase aqueuse, on met en contact la phase organique avec une solution d'acide fort, on sépare la phase aqueuse de la phase organique et on récupère le gallium de la phase aqueuse. La concentration de la solution acide utilisée dépend en particulier de la proportion d'hydroxyquinoléine substituée mise en oeuvre dans la phase organique. Pour les proportions préférées d'hydroxyquinoléine lorsque l'on met en oeuvre des solutions d'acide sulfurique ou nitrique ou perchlorique, leur concentration doit, de préférence, être supérieure à 1,2 M ; lorsque l'on met en oeuvre des solutions d'acide chlorhydrique ou bromhydrique, leur concentration doit, de préférence, être comprise entre 1,2 M et 2,2 M.

Selon une deuxième variante, après avoir séparé la phase organique de la phase aqueuse, on met en contact la phase organique avec un première solution de lavage constituée d'eau ou d'une solution acide très diluée pour éliminer le zinc entraîné dans la phase organique, le gallium restant dans la phase organique, et, après séparation des phases organique et aqueuse, on met en contact la phase organique restant avec une deuxième solution aqueuse d'acide plus concentrée afin de transférer le gallium de la phase organique dans la phase aqueuse, le gallium étant ensuite séparé de la phase aqueuse. La concentration des solutions acides utilisées dépend, en particulier, de la proportion d'hydroxyquinoléine substituée mise en oeuvre dans la phase organique. Pour les proportions préférées d'hydroxyquinoléine, la concentration de la première solution aqueuse d'acide est, de préférence, comprise entre 0,2 M et 0,7 M ; celle de la deuxième solution étant, de préférence, supérieure à 1,2 M, lorsque l'on met en oeuvre des solutions d'acide sulfurique ou nitrique ou perchlorique, et, de préférence, comprise entre 1,2 M et 2,2 M, lorsque l'on met en oeuvre des solutions d'acide chlorhydrique ou bromhydrique.

La solution aqueuse contenant le gallium ainsi obtenue peut être ensuite purifiée par tout moyen approprié, comme par exemple, passage sur résines, lavage avec un alcool ou analogue, tel que décrits dans les brevets français n° 2495999, 2495600, 2495601.

Cette solution peut être également concentrée par tout moyen approprié.

Généralement, la solution aqueuse, après éventuellement purification et/ou concentration, est utilisée pour la production de gallium métal. Le procédé le plus généralement utilisé pour l'obtention de ce métal est un procédé électrolytique qui est décrit dans de nombreuses publications.

Le procédé selon la présente invention peut être mis en oeuvre dans les dispositifs industriels classiques utilisés en extraction liquide/liquide.

D'autres avantages, détails de l'invention apparaîtront plus clairement au vu des exemples qui vont suivre, donnés uniquement à titre indicatif.

## EXEMPLE 1

Une solution aqueuse à pH 2 contenant :

– 0,62 mole/l d'un sel de zinc

– $1{,}43 \cdot 10^{-2}$ mole/l d'un sel de gallium, exprimée en Ga et dont le pH a été fixé à 2 par addition d'acide sulfurique,

est mise en contact, sous agitation, à 40°C pendant 30 minutes avec un volume égal d'une phase organique ayant la composition suivante :

– extractant A: 0,2 mole/l

– laurylsulfate de sodium : 5 % poids ou 0.162 Mole/l

– pentanol : 0,92 Mole/l

– kérosène

– rapport tensio-actif/alcool : 0,18

L'extractant A est une 8-hydroxyquinoléine substituée par un radical saturé et commercialisée par la Société "Schering" sous la dénomination commerciale "KELEX 100".

Après séparation des phases, le taux d'extraction du gallium obtenu est déterminé par dosage du gallium dans la solution aqueuse après séparation. Ce taux est de 100 %.

La phase organique est ensuite lavée par de l'eau pour éliminer le zinc.

Enfin, la phase organique est lavée par un volume égal de solution d'acide sulfurique 2 M pour récupérer

le gallium.

La solution aqueuse de gallium récupérée a la composition suivante :

– 1,39 x $10^{-2}$ mole/l de gallium

– 8 x $10^{-5}$ mole/l de zinc.

Ce résultat montre clairement qu'il est possible, avec un faible temps de contact d'extraire la totalité du gallium et d'avoir une bonne sélectivité par rapport au zinc.

EXEMPLE 2

On répète l'exemple 1 ci-dessus à la différence que la phase organique à la composition suivante :

– extractant A : 0,2 mole/l

– laurylsulfate de sodium : 5 % poids ou 0,162 Mole/l

– pentanol : 1,85 Mole/l

– kérosène

– rapport tensio-actif/alcool : 0,09

Le taux d'extraction de gallium est de 100 % et la solution de gallium obtenue a la même composition qu'à l'exemple 1.

EXEMPLE 3

On répète l'exemple 1, avec une phase organique ayant la composition suivante :

– extractant B : 0,2 mole/l

– dodécylbenzènesulfonate : 5 % ou 0,136 Mole/l de sodium

– Butanol : 4,37 moles/l

– Kérosène.

L'extractant B est une 8-hydroxyquinoléine substituée comprenant des insaturations éthyléniques, commercialisée par la Société HENKEL sous la dénomination "LIX26".

Le taux d'extraction du gallium est de 97 % ; et la solution aqueuse de gallium à la composition suivante :

– Ga : 1,35 x $10^{-2}$ mole/l

– Zn : 8 x $10^{-5\ mole/l}$

EXEMPLE 4 A 7

Ces essais ont été réalisés selon le même mode opératoire que l'exemple 1 avec des couples tensio-actif/co-agent différents. Les résultats obtenus sont rassemblés dans le tableau suivant :

TABLEAU I

| | Tensio-Actif Nature | Tensio-Actif Concentration | Co-agent | Rapport TA/co-agent | % Ga |
|---|---|---|---|---|---|
| 4 | Bromure de cetyltriméthyl ammonium | 26,6 % (0,69 mole/l) | Butanol | 0,1 | 93 |
| 5 | Didonylnaphtalène sulfonate | 30 % (0,61 mole/l) | Pentanol | 0,11 | 52 |
| 6 | Dinonylnaphtalène sulfonate | 15 % (0,306 m/l) | Pentanol | 0,09 | 85 |
| 7 | Laurysulfate de sodium | 4 % (0,162 m/l) | Hexanol | 0,07 | 100 |

A titre comparatif, le pourcentage d'extraction de gallium par une phase organique identique à celle de l'exemple 1 mais ne contenant pas de tensio-actifs est de l'ordre de 1 à 2 % au bout de 30 minutes de contact. Ce pourcentage pourra atteindre une valeur voisine de 10 % au bout de plusieurs heures de contact (environ 10 h).

## Revendications

1- Procédé d'extraction liquide/liquide de gallium contenu dans des solutions aqueuses acides contenant notamment du zinc, consistant à mettre en contact la solution aqueuse avec une phase organique contenant principalement un solvant organique et un extractant, caractérisé en ce que l'extractant est un ou un mélange de composés appartenant à la famille des hydroxyquinoléines substituées, la phase organique contenant un agent tensio-actif à caractère ionique et un co-agent choisi dans le groupe des alcools comprenant de 4 à 15 atomes de carbone et en ce que la phase aqueuse a un pH ajusté à une valeur inférieure à 3, avant sa mise en contact avec la phase organique.

2- Procédé selon la revendication 1, caractérisé en ce que l'agent tensio-actif est un agent à caractère cationique ou anionique, dans les conditions d'utilisation.

3- Procédé selon la revendication 1 ou 2 caractérisé en ce que l'agent tensio-actif cationique est choisi dans le groupe comprenant les sels d'ammonium quaternaire ou d'amines à chaînes longues de formules générales suivantes :

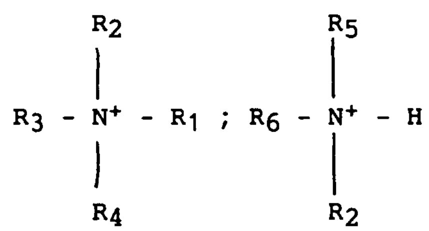

dans lesquelles : $R_1$, $R_2$, $R_3$, $R_4$ identiques ou différents représentent un radical alkyle ; $R_5$, $R_6$, $R_7$ identiques ou différents représentant un radical alkyle et dont au moins un comprend au moins 4 atomes de carbone, de préférence entre 4 et 15 atomes de carbone.

4- Procédé selon l'une des revendications 1 ou 2, caractérisé en ce que l'agent tensio-actif anionique est choisi dans le groupe comprenant les sulfates ou sulfonates substitués de formules générales suivantes :

$$R_1O - SO_3M \; ; \; R_2 - SO_3M$$

dans lesquelles $R_1$ est un radical alkyle, et $R_2$ représente un radical alkyle, alicyclique ou aryle, ces radicaux comportant de 1 à 20 atomes de carbone, de préférence de 5 à 18 atomes de carbone.

5- Procédé selon la revendication 1, caractérisé en ce que le co-agent est choisi dans le groupe comprenant le butanol, le pentanol, l'hexanol, l'heptanol, l'octanol.

6- Procédé selon l'une des revendications précédentes, caractérisé en ce que la concentration en tensioactifs dans la phase organique est comprise entre 2 et 40 % en poids.

7- Procédé selon la revendication 6, caractérisé en ce que la concentration en tensio-actifs est comprise entre 2 et 20 % en poids dans la phase organique.

8- Procédé selon l'une des revendications précédentes, caractérisé en ce que le rapport molaire tensioactif/co-agent est compris entre 0,02 et 0,5 de préférence entre 0,02 et 0,3.

9- Procédé selon l'une des revendications précédentes, caractérisé en ce que la solution aqueuse contient un ou plusieurs des éléments choisis dans le groupe comprenant le cobalt, le cadminum, l'arsenic, le nickel, le fer.

10- Procédé selon l'une des revendications précédentes, caractérisé en ce que la solution aqueuse contient des anions chlorures, sulfates ou nitrates.

11- Procédé selon l'une des revendications précédentes caractérisé en ce que l'extractant est une hydroxyquinoléine substituée, le substituant comprenant au moins une insaturation éthylénique.

12- Procédé selon l'une des revendications 1 à 10, caractérisé en ce que l'extractant est une hydroxyquinoléine substituée, le substituant est un radical carboné saturé.

13- Procédé selon l'une des revendications précédentes, caractérisé en ce que le solvant organique est choisi parmi les hydrocarbures aliphatiques et les coupes pétrolières.

14- Procédé selon l'une des revendications précédentes, caractérisé en ce que le gallium est récupéré à partir de la phase organique par lavage avec une solution acide.

15- Procédé selon la revendication 14 caractérisé en ce que la solution de gallium récupérée est purifiée.

16- Procédé selon la revendication 14 ou 15, caractérisé en ce que le gallium métal est obtenu à partir de la solution de gallium récupérée.

## Patentansprüche

1. Verfahren zur flüssig-flüssig Extraktion von Gallium, das in wäßrigen, sauren, insbesondere zinkhaltigen Lösungen enthalten ist, bei dem die wäßrige Lösung mit einer organischen Phase, die hauptsächlich ein organisches Lösungsmittel und ein Extraktionsmittel enthält, in Berührung gebracht wird, dadurch gekennzeichnet, daß das Extraktionsmittel eine der oder ein Gemisch der zur Familie der substituierten Hydroxychinoline gehörenden Substanzen ist, wobei die organische Phase ein oberflächenaktives Mittel ionischen Charakters und einen Zusatz enthält, der aus der Gruppe der Alkohole mit 4 bis 15 Kohlenstoffatomen ausgewählt ist, und daß die wäßrige Phase, bevor sie mit der organischen Phase in Kontakt gebracht wird, einen auf unter 3 eingestellten pH-Wert hat.

2. Verfahren nach Anspruch 1, dadurch gekennzeichnet, daß das oberflächenaktive Mittel je nach Verwendung kationisch oder anionisch ist.

3. Verfahren nach Anspruch 1 oder 2, dadurch gekennzeichnet, daß das kationische oberflächenaktive Mittel aus der Gruppe der quaternären Ammoniumsalze oder der Salze langkettiger Amine der folgenden allgemeinen Formeln

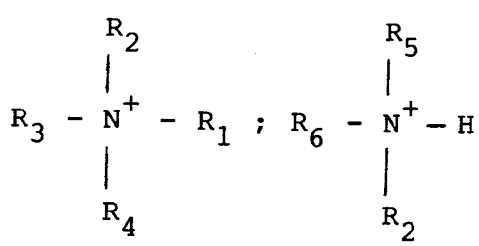

ausgewählt ist, in denen $R_1$, $R_2$, $R_3$, $R_4$, gleich oder verschieden, einen Alkylrest, $R_5$, $R_6$, $R_7$, gleich oder verschieden, einen Alkylrest bedeuten und von denen mindestens einer wenigstens 4 Kohlenstoffatome, vorzugsweise zwischen 4 und 15 Kohlenstoffatomen, enthält.

4. Verfahren nach einem der Ansprüche 1 oder 2, dadurch gekennzeichnet, daß das anionische oberflächenaktive Mittel aus der Gruppe der substituierten Sulfate oder Sulfonate der folgenden allgemeinen Formeln

$$R_1O - SO_3M ; R_2 - SO_3M$$

ausgewählt ist, in denen $R_1$ ein Alkylrest ist und $R_2$ einen Alkyl-, alizyklischen oder Arylrest bedeutet, wobei die Reste 1 bis 20 Kohlenstoffatome, vorzugsweise 5 bis 18 Kohlenstoffatome, enthalten.

5. Verfahren nach Anspruch 1, dadurch gekennzeichnet, daß der Zusatz aus der Gruppe von Butanol, Pentanol, Hexanol, Heptanol und Octanol ausgewählt ist.

6. Verfahren nach einem der vorhergehenden Ansprüche, dadurch gekennzeichnet, daß die Konzentration der oberflächenaktiven Mittel in der organischen Phase zwischen 2 und 40 Gewichtsprozenten liegt.

7. Verfahren nach Anspruch 6, dadurch gekennzeichnet, daß die Konzentration der oberflächenaktiven Mittel in der organischen Phase zwischen 2 und 20 Gewichtsprozenten liegt.

8. Verfahren nach einem der vorhergehenden Ansprüche, dadurch gekennzeichnet, daß das Molverhältnis oberflächenaktives Mittel / Zusatz zwischen 0,02 und und 0,5, vorzugsweise zwischen 0,02 und 0,3, liegt.

9. Verfahren nach einem der vorhergehenden Ansprüche, dadurch gekennzeichnet, daß die wäßrige Lösung eines oder mehrere der Elemente aus der Gruppe von Kobalt, Cadmium, Arsen, Nickel und Eisen enthält.

10. Verfahren nach einem der vorhergehenden Ansprüche, dadurch gekennzeichnet, daß die wäßrige Lösung Chlorid-, Sulfat- oder Nitratanionen enthält.

11. Verfahren nach einem der vorhergehenden Ansprüche, dadurch gekennzeichnet, daß das Extraktionsmittel ein substituiertes Hydroxychinolin ist, wobei der Substituent wenigstens eine ethylenische Unsättigung enthält.

12. Verfahren nach einem der Ansprüche 1 bis 10, dadurch gekennzeichnet, daß das Extraktionsmittel ein substituiertes Hydroxychinolin ist, wobei der Substituent ein gesättigter Kohlenstoffrest ist.

13. Verfahren nach einem der vorhergehenden Ansprüche, dadurch gekennzeichnet, daß das organische Lösungsmittel aus alipathischen Kohlenwasserstoffen und Erdölfraktionen ausgewählt ist.

14. Verfahren nach einem der vorhergehenden Ansprüche, dadurch gekennzeichnet, daß das Gallium aus der organischen Phase durch Waschen mit einer sauren Lösung wiedergewonnen wird.

15. Verfahren nach Anspruch 14, dadurch gekennzeichnet, daß die wiedergewonnene Galliumlösung gereinigt wird.

16. Verfahren nach Anspruch 14 oder 15, dadurch gekennzeichnet, daß das Galliummetall aus der wiedergewonnenen Galliumlösung erhalten wird.

## Claims

1. Process for liquid/liquid extraction of gallium present in acidic aqueous solutions containing especially zinc, consisting in placing the aqueous solution in contact with an organic phase containing chiefly an organic solvent and an extractant, characterised in that the extractant is one or a mixture of compounds belonging to the class of substituted hydroxyquinolines, the organic phase containing a surface-active agent of ionic nature and a coagent chosen from the group of alcohols containing from 4 to 15 carbon atoms and in that the aqueous phase has a pH adjusted to a value lower than 3 before it is placed in contact with the organic phase.

2. Process according to Claim 1, characterised in that the surface-active agent is an agent of cationic or anionic nature in the conditions of use.

3. Process according to Claim 1 or 2, characterised in that the cationic surface-active agent is chosen from the group comprising quaternary ammonium salts or salts of long-chain amines of the following general formulae:

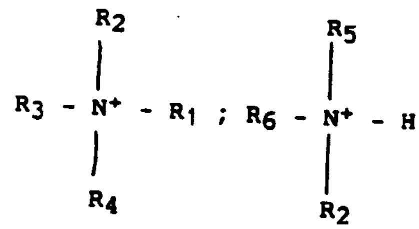

in which: $R_1$, $R_2$, $R_3$ and $R_4$ which are identical or different, denote an alkyl radical; $R_5$, $R_6$ and $R_7$, which are identical or different, denoting an alkyl radical and at least one of which contains at least 4 carbon atoms, preferably between 4 and 15 carbon atoms.

4. Process according to either of Claims 1 and 2, characterised in that the anionic surface-active agent is chosen from the group comprising substituted sulphonates or sulphates of the following general formulae:

$$R_1O - SO_3M; R_2 - SO_3M$$

in which $R_1$ is an alkyl radical and $R_2$ denotes an alkyl, alicyclic or aryl radical, these radicals containing from 1 to 20 carbon atoms, preferably from 5 to 18 carbon atoms.

5. Process according to Claim 1, characterised in that the coagent is chosen from the group comprising butanol, pentanol, hexanol, heptanol and octanol.

6. Process according to one of the preceding claims, characterised in that the concentration of surfactants in the organic phase is between 2 and 40% by weight.

7. Process according to Claim 6, characterised in that the concentration of surfactants is between 2 and 20% by weight in the organic phase.

8. Process according to one of the preceding claims, characterised in that the molar ratio surfactant/coagent is between 0.02 and 0.5, preferably between 0.02 and 0.3.

9. Process according to one of the preceding claims, characterised in that the aqueous solution contains one or more of the elements chosen from the group comprising cobalt, cadmium, arsenic, nickel and iron.

10. Process according to one of the preceding claims, characterised in that the aqueous solution contains chloride, sulphate or nitrate anions.

11. Process according to one of the preceding claims, characterised in that the extractant is a substituted hydroxyquinoline, the substituent containing at least one ethylenic unsaturation.

12. Process according to one of Claims 1 to 10, characterised in that the extractant is a substituted hydroxyquinoline, the substituent is a saturated carbon-containing radical.

13. Process according to one of the preceding claims, characterised in that the organic solvent is chosen from aliphatic hydrocarbons and petroleum cuts.

14. Process according to one of the preceding claims, characterised in that the gallium is recovered from the organic phase by washing with an acidic solution.

15. Process according to Claim 14, characterised in that the recovered gallium solution is purified.

16. Process according to Claim 14 or 15, characterised in that gallium metal is obtained from the recovered gallium solution.